# EUROPÄISCHE PATENTSCHRIFT

(11) **EP 1 192 377 B1**
(45) Veröffentlichungstag und Bekanntmachung des Hinweises auf die Patenterteilung: **28.05.2003**
(21) Anmeldenummer: 00947906.4
(22) Anmeldetag: 01.07.2000
(51) Int. Cl.: F16K 31/00

(54) **PIEZOELEKTRISCHES VENTIL**
PIEZOELECTRIC VALVE
VANNE PIEZO-ELECTRIQUE

(30) Priorität: 09.07.1999 DE 19931990
(43) Veröffentlichungstag der Anmeldung: 03.04.2002
(73) Patentinhaber: Festo AG & Co, 73734 Esslingen (DE); Ceramtec AG Innovative Ceramic Engineering, 73207 Plochingen (DE)
(72) Erfinder: POST, Peter, D-73760 Ostfildern-Nellingen (DE); GERHARTZ, Jürgen, D-73734 Esslingen (DE); BINDIG, Reiner, D-95463 Bindlach (DE)
(74) Vertreter: Abel, Martin, Dipl.-Ing.
(86) Internationale Anmeldenummer: EP0006154
(87) Internationale Veröffentlichungsnummer: WO01004526

(56) Entgegenhaltungen:
- DE-A- 19 714 045
- GB-A- 2 185 554

## Beschreibung

Die Erfindung betrifft ein vorzugsweise direktbetätigtes Elektroventil, mit einem relativ zu einem Ventilgehäuse linear verschiebbar geführten Ventilglied, dem eine elektrisch aktivierbare Antriebseinrichtung zugeordnet ist.

Ein Elektroventil nach dem Oberbegriff des Anspruchs 1 ist aus der Druckschrift DE 19 714 045 bekannt.

Derartige Ventile sind in Gestalt sogenannter Magnetventile weit verbreitet. Deren Antriebseinrichtung beinhaltet in der Regel einen Elektromagneten, der einen das Ventilglied bildenden Anker antreibt. Das Ventilglied ist in einem Ventilgehäuse linear verschiebbar geführt, wobei das Ventilgehäuse zumindest teilweise vom Gehäuse des Elektromagneten gebildet sein kann.

Die bekannten Elektroventile haben den Nachteil, daß die einer Miniaturisierung entgegenstehenden technologischen Schranken relativ hoch liegen. Außerdem ist der Betrieb der Magnetventile regelmäßig mit einem relativ hohen Energieverbrauch verbunden, der zu einer starken Wärmeentwicklung führt. Nicht zuletzt gelangen elektromagnetische Antriebseinrichtungen auch im Zusammenhang mit der Realisierung hoher Schaltgeschwindigkeiten relativ bald an ihre Grenzen.
Es ist die Aufgabe der vorliegenden Erfindung, ein direktbetätigtes, also nicht vorgesteuertes Elektroventil der eingangs genannten Art zu schaffen, das bei reduziertem Energieverbrauch geringere Baugrößen und höhere Schaltgeschwindigkeiten ermöglicht.

Diese Aufgabe wird durch ein Elektroventil mit den Merkmalen des Anspruchs 1 gelöst.

Auf diese Weise wird das Biegeverhalten eines als Piezo-Biegeelement ausgeführten Piezowandlers ausgenutzt, um die Betätigung eines Ventilgliedes hervorzurufen, wobei vorzugsweise eine direkte Betätigung vorgesehen ist. Dies ermöglicht bisher unerreichte Reduzierungen in der Baugröße des Ventils, wobei durch die Queranordnung der vorhandenen Piezo-Biegeelemente insbesondere auch die Baulänge des Ventils sehr kompakt gehalten werden kann. Die piezoelektrische Antriebseinrichtung gestattet überdies hochfrequente Ventilbetätigungen, beispielsweise in der Größenordnung von 200 Hz, so daß wesentlich kürzere Schaltzeiten realisiert werden können. Es ist somit insgesamt möglich, bei höheren Leistungsdaten schneller zu schalten und geringere Bauvolumina zu erreichen. Weiterhin stellt sich bei einem höheren Wirkungsgrad als bei Magnetventilen eine geringere Wärmebelastung ein.
Zwar sind sogenannte Piezo-Ventile als solches bekannt, beispielsweise aus der DE 198 01 613 A1. Bei ihnen wird das Piezo-Biegeelement bisher allerdings stets unmittelbar selbst als Ventilglied eingesetzt und nicht als Ventilantrieb, der durch mechanische Kopplung ein verschiebbar geführtes Ventilglied antreibt.

Vorteilhafte Weiterbildungen der Erfindung gehen aus den Unteransprüchen hervor. Bei dem Ventilglied handelt es sich zweckmäßigerweise um einen Ventilschieber, beispielsweise in einer Bauform als sogenannter Kolbenschieber.

Die Antriebseinrichtung des Elektroventils kann mit lediglich einem einzigen Piezo-Biegeelement ausgestattet sein. Ist es mit dem Ventilglied entsprechend bewegungsgekoppelt, können auch hierbei bei Bedarf Bewegungen des Ventilgliedes in entgegengesetzten Axialrichtung hervorgerufen werden. Denkbar wäre aber auch die ergänzende Installation einer der Stellkraft des Piezo-Biegeelementes entgegenwirkenden Rückstelleinrichtung, beispielsweise einer Federeinrichtung.

Als wesentlich vorteilhafter wird jedoch eine Ausführungsform eingestuft, bei der die piezoelektrische Antriebseinrichtung mehrere an dem Ventilglied angreifende Piezo-Biegeelemente aufweist. Handelt es sich dabei um Piezo-Biegeelemente mit identisch orientierter Kraftwirkung, lassen sich erhöhte Stellkräfte realisieren. Als besonders zweckmäßig wird jedoch eine Bauform angesehen, bei der zwei Piezo-Biegeelemente vorhanden sind, die mit einander entgegengesetzt orientierten Stellkräften auf das Ventilglied einwirken können. Auf diese Weise läßt sich unter anderem eine piezoelektrisch aktuierte Stellbewegung des Ventilgliedes in beiden axialen Bewegungsrichtungen realisieren. Vor allem in diesem Zusammenhang ist es von Vorteil, wenn eine Steuereinrichtung vorhanden ist, die eine aufeinander abgestimmte elektrische Ansteuerung der Piezo-Biegeelemente mit variablen Spannungen ermöglicht, um in Abhängigkeit von den angelegten Spannungswerten unterschiedliche Stellwege und/oder Stellpositionen zu erhalten. Hier wäre beispielsweise eine spannungsmäßig abgestufte Ansteuerung der Piezo-Biegeelemente möglich, um ein Mehrstellungsverhalten des Ventilgliedes zu realisieren. Bei stufenloser variabler Ansteuerung kann hingegen sehr einfach ein stetiges Bewegungsverhalten und dementsprechend ein als Stetigventil ausgeführtes Elektroventil verwirklicht werden.

Es wäre möglich, zwei Piezo-Biegeelemente so zu positionieren, daß sie mit den einander entgegengesetzten axialen Endabschnitten des Ventilgliedes zusammenwirken. Einen konstruktiv verringerten Bauaufwand verspricht jedoch eine Ausführungsform, bei der zwei am Ventilglied angreifende Piezo-Biegeelemente benachbart zueinander angeordnet sind und an ein und demselben axialen Endabschnitt des Ventilgliedes angreifen.

Vor allem wenn das Ventilglied durch zwei Piezo-Biegeelemente mit entgegengesetzter Kraftrichtung beaufschlagt wird, ist es vorteilhaft, wenn mindestens eines und vorzugsweise beide Piezo-Biegeelemente unter mechanischer Vorspannung am Ventilglied angreifen, so daß die Piezo-Biegeelemente zumindest partiell aus ihrer Neutrallage ausgelenkt sind. Dies verspricht mit einfachen Mitteln eine spielfreie Kraftübertragung auf das Ventilglied selbst in Fällen, bei denen das Piezo-Biegeelement ausschließlich durch Berührkontakt mit dem Ventilglied zusammenarbeitet. Somit lassen sich Schaltbewegungen mit hoher Präzision realisieren.

Um das Elektroventil in eine elektronische Steuerung integrieren zu können, ist es von Vorteil, wenn eine Positionserfassungseinrichtung vorhanden ist, mit der sich zumindest eine, vorzugsweise jedoch kontinuierlich jede momentane Stellung des Ventilgliedes ermitteln läßt. Eine solche Positionserfassungseinrichtung erhält die notwendigen Informationen zweckmäßigerweise auf Basis des aktuellen Biegezustandes mindestens eines Piezo-Biegeelementes, der zweckmäßigerweise durch Einsatz mindestens eines am Piezo-Biegeelement angebrachten Dehnmeßstreifens erfaßt wird.

Die Piezo-Biegeelemente verfügen in vorteilhafter Bauweise über einen länglichen, streifenartigen Träger, der zumindest einseitig, also an einer seiner beiden größeren Flächen, mit piezoelektrischem Material beschichtet ist, wobei insbesondere eine Multilayer-Beschichtung zum Einsatz kommt. Die einzelnen Schichtebenen könnten hier parallel zur Ausdehnungsebene des Trägers verlaufen, besonders vorteilhaft erscheint jedoch eine Realisierung mit quer zur Längsrichtung des Trägers ausgerichteten Schichtebenen, so daß das piezoelektrische Material aus einem streifenförmigen Piezostapel aufgebaut sein kann.
Nachfolgend wird die Erfindung anhand der beiliegenden Zeichnung näher erläutert. In dieser zeigen:
- Figur 1: einen axialen Endbereich einer ersten Bauform des erfindungsgemäßen Elektroventils in stark schematisierter Darstellungsweise und im Längsschnitt,
- Figur 2: in perspektivischer Einzeldarstellung ein beim Elektroventil gemäß Figur 1 vorzugsweise zum Einsatz gelangendes Piezo-Biegeelement,
- Figur 3: in den Bildern (a) bis (d) verschiedene Betätigungsphasen der bei dem Elektroventil gemäß Figur 1 zum Einsatz gelangenden piezoelektrischen Antriebseinrichtung, wobei Bild (e) eine zur Realisierung dieser Betätigungsphasen besonders geeignete Steuerschaltung wiedergibt,
- Figur 4: in stark schematisierter Darstellungsweise ein weiteres Elektroventil der erfindungsgemäßen Bauart, wobei jedoch im Vergleich zur Ausführungsform der Figuren 1 bis 3 die Piezo-Biegeelemente der Antriebseinrichtung mit beiden Endabschnitten des Ventilgliedes zusammenwirken und wobei eine unausgelenkte Neutralstellung gezeigt ist, und
- Figur 5: das Elektroventil aus Figur 4 bei aktivierter Antriebseinrichtung mit dementsprechend ausgelenktem Ventilglied.

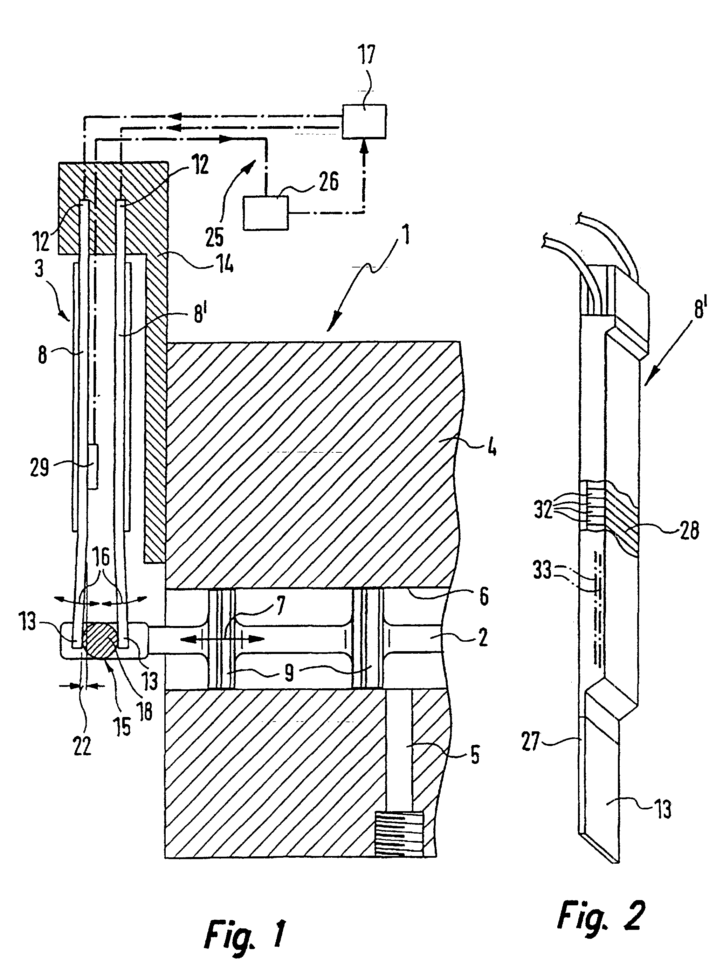

Die Figur 1 zeigt einen im Längsschnitt abgebildeten Endabschnitt eines direktbetätigten Elektroventils 1, also eines Ventils, dessen Ventilglied 2 durch eine elektrisch aktivierbare Antriebseinrichtung 3 direkt, ohne fluidische Vorsteuerung, betätigt wird.

Das Elektroventil 1 verfügt über ein Ventilgehäuse 4, das von einer vom Ventiltyp abhängigen Anzahl von Ventilkanälen 5 durchsetzt ist und das eine beim Ausführungsbeispiel zylindrisch konturierte längliche Aufnahme 6 beinhaltet, in der das Ventilglied 2 in Längsrichtung linear verschiebbar geführt ist.

Die nur teilweise sichtbaren Ventilkanäle 5 münden in die Aufnahme 6 ein. Sie werden in Abhängigkeit von der momentanen Stellung des Ventilgliedes 2 in aufeinander abgestimmter Weise fluidisch verknüpft, so daß sich beispielsweise die Funktionalität eines 3/2-Wegeventils oder eines höherfunktionalen Wegeventils einstellt.

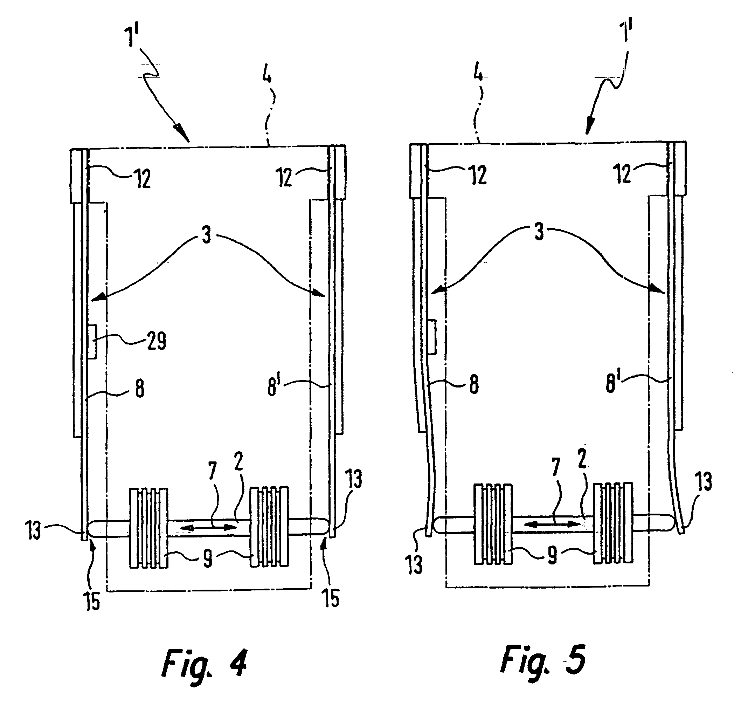

Bei der in Figuren 4 und 5 gezeigten weiteren Ausführungsform eines Elektroventils 1' sind übereinstimmende Komponenten mit identischen Bezugszeichen versehen. Das Ventilgehäuse 4 ist dort nur strichpunktiert angedeutet.

Bei beiden Elektroventilen 1, 1' ist das Ventilglied 2 als Ventilschieber ausgeführt, der über Längenabschnitte unterschiedlichen Durchmessers verfügt, so daß sich Steuerabschnitte 9 ergeben, die mit der Wandung der Aufnahme 6 in Dichtkontakt stehen. Bei dem Elektroventil könnte es sich allerdings auch um ein Sitzventil handeln.

Die Antriebseinrichtung 3 ist als piezoelektrische Antriebseinrichtung ausgeführt. Sie beinhaltet bei den gezeigten Ausführungsbeispielen jeweils zwei sich quer zu der durch Doppelpfeil angedeuteten Verschieberichtung 7 des Ventilgliedes 2 erstreckende Piezo-Biegeelemente 8, 8'. Diese sind mit ihrem einen axialen Ende, nachfolgend als Befestigungsende 12 bezeichnet, bezüglich dem Ventilgehäuse 4 ortsfest fixiert und greifen mit ihrem entgegengesetzten anderen Ende, das nachfolgende als Betätigungsende 13 bezeichnet sei, am Ventilglied 2 an.

Die gehäusefeste Fixierung kann gemäß Figuren 4 und 5 unmittelbar erfolgen. Vorzugsweise liegt jedoch eine mittelbare Befestigung vor, beispielsweise gemäß Figur 1 unter Zwischenschaltung eines Halters 14, an dem die Befestigungsenden 12 eingespannt sind und der seinerseits am Ventilgehäuse 4 befestigt ist.

Die Piezo-Biegeelemente 8, 8' können einen an sich bekannten Aufbau haben, so daß ihre durch Anlegen einer elektrischen Spannung erfolgende Aktivierung eine in Figur 1 durch Doppelpfeile schematisch angedeutete Schwenkbewegung zur Folge hat, die ihre Ursache in einem Verbiegen der Piezo-Biegeelemente 8, 8' findet und daher als Biegebewegung 16 bezeichnet sei. Im wesentlichen führt die Aktivierung der Piezo-Biegeelemente 8, 8' dazu, daß sie mit ihren Betätigungsenden 13 eine Art Schwenkbewegung bezüglich der fixierten Befestigungsenden 12 ausführen, wobei die Ebene dieser Schwenkbewegung bei den Ausführungsbeispielen mit der Zeichenebene zusammenfällt und zur linearen Verschieberichtung 7 des Ventilgliedes 2 parallel ausgerichtet ist.

Zur elektrischen Ansteuerung der Piezo-Biegeelemente 8, 8' ist eine geeignete Steuereinrichtung 17 vorgesehen. Sie ist zweckmäßigerweise dahingehend ausgelegt, daß sie die vorhandenen Piezo-Biegeelemente unabhängig voneinander individuell elektrisch ansteuern kann.

Jedes Piezo-Biegeelement 8, 8' ist mit dem Ventilglied 2 im Bereich einer an diesem vorgesehenen Koppelstelle 15 mechanisch derart bewegungsgekoppelt, daß die elektrisch verursachte Biegebewegung 16 eines jeweiligen Piezo-Biegeelementes 8, 8' eine lineare Verschiebebewegung des Ventilgliedes 2 in der schon definierten Verschieberichtung 7 hervorruft.

Um dabei den miteinander kooperierenden Komponenten die erforderlichen Bewegungsfreiheitsgrade zu garantieren, ist bei den Ausführungsbeispielen ein ausschließlich auf Berührkontakt basierendes Zusammenwirken zwischen den Piezo-Biegeelementen 8, 8' und dem Ventilglied 2 vorgesehen. Das Ganze zweckmäßigerweise derart, daß die Piezo-Biegeelemente 8, 8' das Ventilglied 2 mit mechanischer Vorspannung beaufschlagen.

Im einzelnen sind die beiden Piezo-Biegeelemente 8, 8' so ausgebildet und installiert, daß sie mit einander entgegengesetzt orientierten Stellkräften auf das Ventilglied 2 einwirken können. Auf diese Weise ist jeweils ein Piezo-Biegeelement 8, 8' maßgeblich für die Verlagerung des Ventilgliedes 2 in einer der beiden axialen Verschieberichtungen verantwortlich.

Beim Ausführungsbeispiel der Figuren 1 bis 3 sind die beiden Piezo-Biegeelemente 8, 8' kompakt auf engstem Raume zusammengefaßt. Sie liegen längsseits benachbart nebeneinander, wobei sie bezogen auf die Verschieberichtung 7 nacheinander plaziert sind. Ihre Betätigungsenden 13 beaufschlagen an der Koppelstelle 15 ein am Ventilglied 2 vorgesehenes Übertragungsglied 18 auf bezüglich der Verschieberichtung 7 axial einander entgegengesetzt orientierten Seiten. Mit anderen Worten ausgedrückt, sitzt das zum Beispiel stegartige Übertragungsglied 18 zwischen den beiden Betätigungsenden 13, wobei durch die schon erwähnte mechanische Vorspannung der Piezo-Biegeelemente 8, 8' eine in Verschieberichtung 7 spielfreie Einspannung gegeben ist.

Durch die mechanische Vorspannung verfügen die Piezo-Biegeelemente 8, 8' im Bereich ihrer Betätigungsenden 13 über eine in Figur 1 etwas übertrieben dargestellte winkelmäßige Auslenkung im Vergleich zum Neutralzustand und entgegen der von ihnen jeweils verursachten Verschieberichtung des Ventilgliedes 2. Diese Auslenkung ist in Figur 1 bei 22 ersichtlich.

Ein unter Vorspannung erfolgendes Angreifen der Piezo-Biegeelemente 8, 8' am Ventilglied 2 kann auch beim Ausführungsbeispiel der Figuren 4 und 5 vorgesehen sein. Jedenfalls ist dort aber eine dahingehende Anordnung getroffen, daß die beiden Piezo-Biegeelemente 8, 8' einen größeren Abstand zueinander aufweisen und jeweils an einem der beiden axialen Endabschnitte des Ventilgliedes 2 angreifen. Sie sind zu diesem Zweck im Bereich der beiden einander entgegengesetzten Endabschnitte des Ventilgehäuses 4 plaziert, während sie gemäß Figur 1 gemeinsam im Bereich des einen Gehäuseendes installiert sind. Gemäß Figuren 4 und 5 erstreckt sich somit das Ventilglied 2 zwischen den beiden Piezo-Biegeelementen 8, 8', zwischen denen es dabei spielfrei eingespannt sein kann.

Während ihrer Aktivierung können die Piezo-Biegeelemente 8, 8' im Kontaktbereich mit dem Ventilglied 2 an diesem ablaufen oder abgleiten, so daß mechanische Verspannungen vermieden werden. Es versteht sich dabei, daß zwischen den Piezo-Biegeelementen 8, 8' und dem Ventilglied 2 bei Bedarf auch eine gegenständliche Verbindung vorgesehen sein kann, beispielsweise unter Einschaltung von Gelenk- und/oder Scharniermitteln.

Die piezoelektrische Antriebseinrichtung 3 könnte auch mit nur einem Piezo-Biegeelement ausgestattet sein, das dann zweckmäßigerweise für die Erzeugung der Schaltbewegung des Ventilgliedes 2 in nur einer Verschieberichtung verantwortlich ist. Geeignete Rückstellmittel, beispielsweise eine pneumatische oder fluidische Federeinrichtung oder eine ausreichende Federelastizität des Piezo-Biegeelementes selbst, könnten in diesem Falle die Rückstellung bei deaktiviertem Piezo-Biegeelement hervorrufen. Denkbar wäre es auch, das Piezo-Biegeelement durch entsprechenden Aufbau so auszuführen, daß es in zwei Schwenkrichtungen aktiv auslenkbar ist, um auf diese Weise die Stellbewegung des Ventilgliedes 2 in beiden Axialrichtungen durch ein und dasselbe Piezo-Biegeelement hervorzurufen.

Bei einer ebenfalls nicht dargestellten Ausführungsform ist die Antriebseinrichtung 3 mit mehr als zwei Piezo-Biegeelementen ausgestattet. Wie im übrigen auch bei einer Zweifach-Anordnung von Piezo-Biegeelementen könnte eine solche Bauform dazu verwendet werden, um eine Addition der Piezo-Stellkräfte und dadurch eine Kraftverstärkung zu erreichen.

Bei allen Ausführungsbeispielen ist es möglich, durch variable stufenlose Vorgabe der an die Piezo-Biegeelemente 8, 8' angelegten Spannungen eine stetige Verstellcharakteristik des Ventilgliedes 2 zu realisieren. Auf diese Weise eignet sich das Elektroventil beispielsweise für Einsätze, bei denen das zu steuernde Fluid, insbesondere Druckluft, mit variabler Strömungsrate einem Verbraucher zugeführt werden soll. Ein besonders zweckmäßiges Einsatzfeld ist die Proportionalventiltechnik.

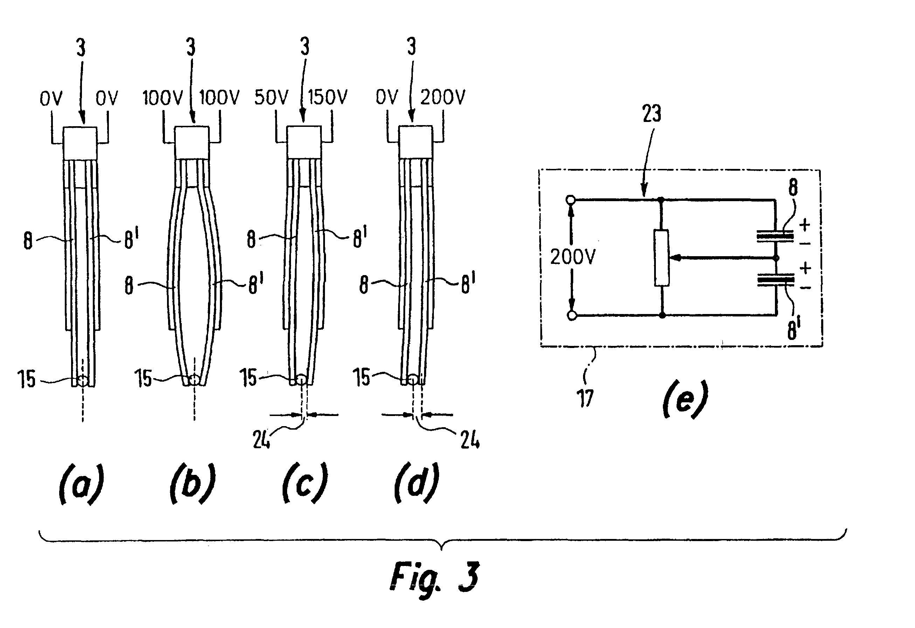

Anhand der Figur 3 wird allerdings deutlich, daß es durchaus möglich ist, durch die piezoelektrische Antriebseinrichtung 3 ein digitales Mehrstellungsverhalten des Ventilgliedes 2 zu realisieren, wobei das Ventilglied 2 durch Zurücklegen vorgegebener Stellwege in ganz bestimmten Stellpositionen positioniert wird. Dies geschieht hier durch eine spannungsmäßig entsprechend abgestufte Ansteuerung des Piezo-Biegeelement-Paares 8, 8', wobei sich die Stellkräfte der beiden Piezo-Biegeelemente 8, 8' gegenseitig beeinflussen, so daß in der Summe an der Koppelstelle 15 bzw. an dem Übertragungsglied 18 ein resultierender Stellweg abgegriffen werden kann, der aus der Überlagerung der Biegebewegungen der beiden Piezo-Biegeelemente 8, 8' resultiert.

In Figur 3(e) ist eine zweckmäßigerweise in die Steuereinrichtung 17 integrierte Steuerschaltung 23 dargestellt, die als Spannungsteilerschaltung ausgeführt ist, wobei eine anliegende Ausgangsspannung - beim Ausführungsbeispiel 200 V - je nach Einstellung in einem vorbestimmten Verhältnis auf die beiden Piezo-Biegeelemente 8, 8' verteilt wird. Mögliche Auswirkungen bestimmter Spannungsaufteilungen machen die Abbildungen (a) bis (d) der Figur 3 deutlich.

Die Figur 3(a) zeigt die beiden Piezo-Biegeelemente 8, 8' in ihrer deaktivierten Neutralstellung, also ihrer stromlosen Null-Lage. Diese Neutralstellung liegt folglich auch-bei einem Stromausfall an, so daß darauf basierend eine gewünschte Fail-Safe-Funktion realisiert werden kann.

Die Figur 3(b) zeigt eine gleichmäßige Aufteilung der Ausgangsspannung auf beide Piezo-Biegeelemente 8, 8'. Hier heben sich die an der Koppelstelle 15 auf das Ventilglied 2 einwirkenden Biegewandlerkräfte auf, wobei sich die Piezo-Biegeelemente 8, 8' zwar auswölben, insgesamt aber keine Verschiebung des Ventilgliedes 2 hervorrufen.

Die Figur 3(c) zeigt einen Zustand, bei dem über eine entsprechende Vorgabe der Steuerschaltung 23 am einen Piezo-Biegeelement 8' eine Spannung von 150 V und am anderen Piezo-Biegeelemente 8 eine Spannung von 50 V anliegt. Daraus resultiert eine Auslenkung der Koppelstelle 15 und dementsprechend ein axialer Stellweg 24 des Ventilgliedes 2, der im vorliegenden Fall die Hälfte des maximal erzeugbaren Stellweges beträgt.

Die Figur 3(d) schließlich zeigt einen Ansteuerungszustand, bei dem die gesamte Ausgangsspannung von 200 V an dem einen Piezo-Biegeelement 8' anliegt, während das andere Piezo-Biegeelement 8 spannungslos ist. In diesem Falle ergibt sich an der Koppelstelle 15 und dementsprechend am mit dieser verbundenen Ventilglied 2 der maximal mögliche Stellweg 24.

Es ist also möglich, durch aufeinander abgestimmte elektrische Ansteuerung der beiden Piezo-Biegeelemente 8, 8' mit variablen Spannungen unterschiedliche Stellwege und/oder Stellpositionen des Ventilgliedes 2 hervorzurufen.

Ein besonderer Vorteil der piezoelektrischen Aktivierung des Elektroventils 1, 1' liegt auch darin, daß eine hochfrequente Ventilbetätigung möglich ist, beispielsweise in der Größenordnung von 200 Hz, so daß extrem kurze Schaltzeiten realisiert werden können.

Es kann eine Positionserfassungseinrichtung 25 vorgesehen sein, um eine oder mehrere Positionen und dabei vorzugsweise jede Momentanposition des Ventilgliedes 2 zu erfassen. Die beim Ausführungsbeispiel realisierte Bauform sieht dabei eine Positionserfassung auf Basis des aktuellen Biegezustandes mindestens eines Piezo-Biegeelementes 8 der piezoelektrischen Antriebseinrichtung 3 vor. Hierzu kann gemäß Abbildung das betreffende Piezo-Biegeelement 8 mit mindestens einem Dehnmeßstreifen 29 bestückt sein, dessen Dehnungszustand vom Biegewinkel des Piezo-Biegeelementes 8 abhängt und der dementsprechend in der Lage ist, Positionssignale hervorzurufen, die in einer Auswerteeinheit 26 ausgewertet werden. Letztere kann wie abgebildet separat ausgeführt oder aber auch ein Bestandteil der Steuereinrichtung 17 sein.

Anstelle der Dehnmeßstreifen 29 könnten auch andere geeignete Sensoren zum Einsatz gelangen. Ferner wäre es möglich, mehrere und zweckmäßigerweise jedes der vorhandenen Piezo-Biegeelemente 8, 8' mit einer dementsprechenden Sensorik auszustatten. In Figur 2 ist noch eine mögliche Ausführungsform eines Piezo-Biegeelementes 8' abgebildet, das in der piezoelektrischen Antriebseinrichtung 3 vorteilhaft eingesetzt werden kann. Es verfügt über einen streifenartigen länglichen Träger 27, beispielsweise aus Keramikmaterial und/oder aus Metall, der einseitig, an einer seiner beiden größerflächigen Steifenflächen, mit piezoelektrischem Material 28 beschichtet ist. Dieses piezoelektrische Material 28 hat zweckmäßigerweise Multilayer-Aufbau mit mehreren aufeinanderliegenden Piezoschichten 32.

Beim Ausführungsbeispiel liegt eine der Längsachse des Trägers 27 folgende Schichtung vor, so daß die Schichtebenen der einzelnen Piezoschichten 32 quer zur Längsrichtung des Trägers 27 verlaufen und diese Längsrichtung insbesondere rechtwinkelig zu den einzelnen Schichtebenen ausgerichtet ist. Das piezoelektrische Material 28 erhält dadurch einen Aufbau vergleichbar eines piezoelektrischen Stapeltranslators, wobei die einzelnen Piezoschichten in entsprechender Weise kontaktiert sind. Das Anlegen einer Spannung führt nun zu einer Längenänderung des Piezostapels und daraus resultierend zu einer Krümmung des Trägers 27, dessen vorderes Ende das Betätigungsende 13 bildet.

Das piezoelektrische Material 28 bedeckt zweckmäßigerweise nur eine Teillänge des Trägers 27. Möglich sind aber auch andere Ausführungsformen. So kann der Träger mit aktivem Piezomaterial (Multilayer aus Piezo- und Elektrodenmaterial) oder mit passivem Piezomaterial (Piezomaterial ohne Elektrodenschichten) bündig überzogen sein. Dadurch reduziert sich die Kerbwirkung zwischen Piezomaterial und Träger, verbunden mit einer Erhöhung der Lebensdauer.

Bei einer abgewandelten Bauform ist das piezoelektrische Material 28 vergleichbar einem Streifentranslator aufgebaut, wobei die in Figur 2 für einen solchen Aufbau strichpunktiert angedeuteten Piezoschichten 33 in Längsrichtung des Trägers 27 mit zur Trägerebene parallelen Schichtebenen verlaufen können.

Vorteilhafterweise wird als Trägermaterial hochfeste Keramik verwendet, wie zum Beispiel Aluminiumoxid, Zirkonoxid oder Siliziumnitrid. Auf das Trägermaterial wird das bereits streifenförmig vorgeformte Piezomaterial aufgeklebt, ohne daß dabei Isolationsprobleme entstehen können. Wird als Trägermaterial ein Metall verwendet, so ist zwischen Metall-Träger und Piezomaterial ein dünner Isolator, aus zum Beispiel Polyamid notwendig.

Es hat sich als vorteilhaft erwiesen, das Piezo-Biegeelement nicht wie allgemein üblich am Punkt der maximalen Auslenkung, sondern am Punkt des maximalen elektromechanischen Wirkungsgrades zu betreiben. Dieser kann in bekannter Weise durch Abstimmung von E-Modul und Dicke des Trägers und der piezoelektrischen Beschichtung aufeinander eingestellt werden.

Kommt zur Positionserfassung ein Dehnmeßstreifen 29 zur Anwendung, würde dieser zweckmäßigerweise an der dem piezoelektrischen Material 28 abgewandten zweiten größerflächigen Seitenfläche des Trägers 27 plaziert werden.

## Patentansprüche

1. Elektroventil, mit einem relativ zu einem Ventilgehäuse (4) linear verschiebbar geführten Ventilglied (2), dem eine elektrisch aktivierbare piezoelektrische Antriebseinrichtung zugeordnet ist, die mindestens ein sich quer zur Verschieberichtung des Ventilgliedes (2) erstreckendes Piezo-Biegeelement (8, 8') enthält, das derart einerseits am Ventilglied (2) angreift und andererseits gehäusefest fixiert ist, dass seine elektrisch verursachte Biegebewegung die lineare Verschiebebewegung des Ventilgliedes (2) hervorruft, **dadurch gekennzeichnet, dass** die piezoelektrische Antriebseinrichtung (3) mehrere an dem Ventilglied (2) angreifende Piezo-Biegeelemente (8, 8') aufweist, wobei mindestens zwei Piezo-Biegeelemente (8, 8') vorgesehen sind, die mit einander entgegengesetzt orientierten Stellkräften auf das Ventilglied (2) einwirken können.

2. Elektroventil nach Anspruch 1, **dadurch gekennzeichnet, dass** das Ventilglied (2) von einem Ventilschieber gebildet ist.

3. Elektroventil nach Anspruch 1 oder 2, **dadurch gekennzeichnet, dass** verschiedene Piezo-Biegeelemente (8, 8') individuell elektrisch ansteuerbar sind.

4. Elektroventil nach einem der Ansprüche 1 bis 3, **gekennzeichnet durch** eine Steuereinrichtung (17) zur aufeinander abgestimmten elektrischen Ansteuerung der Piezo-Biegeelemente (8, 8') mit variablen Spannungen zur Hervorrufung unterschiedlicher Stellwege und/oder Stellpositionen des Ventilgliedes (2).

5. Elektroventil nach Anspruch 4, **dadurch gekennzeichnet, dass** die Steuereinrichtung (17) eine spannungsmäßig abgestufte Ansteuerung der Piezo-Biegeelemente (8, 8') ermöglicht, um ein Mehrstellungsverhalten des Ventilgliedes (2) zu realisieren.

6. Elektroventil nach einem der Ansprüche 1 bis 5, **dadurch gekennzeichnet, dass** zwei am Ventilglied (2) angreifende Piezo-Biegeelemente (8, 8') benachbart zueinander angeordnet sind.

7. Elektroventil nach Anspruch 6, **dadurch gekennzeichnet, dass** die beiden Piezo-Biegeelemente (8, 8') gemeinsam an einem der beiden axialen Endabschnitte des Ventilgliedes (2) angreifen.

8. Elektroventil nach Anspruch 6 oder 7, **dadurch gekennzeichnet, dass** die beiden Piezo-Biegeelemente (8, 8') gemeinsam einem der beiden axialen Endbereiche des Ventilgehäuses (4) zugeordnet sind.

9. Elektroventil nach einem der Ansprüche 1 bis 8, **dadurch gekennzeichnet, dass** zwei Piezo-Biegeelemente (8, 8') an den beiden einander entgegengesetzten axialen Endabschnitten des Ventilgliedes (2) angreifen.

10. Elektroventil nach einem der Ansprüche 1 bis 9, **gekennzeichnet durch** eine Ausgestaltung als Stetigventil.

11. Elektroventil nach einem der Ansprüche 1 bis 10, **dadurch gekennzeichnet, dass** mindestens ein Piezo-Biegeelement (8, 8') unter mechanischer Vorspannung am Ventilglied (2) angreift.

12. Elektroventil nach Anspruch 11, **dadurch gekennzeichnet, dass** zwei entgegengesetzt wirkende Piezo-Biegeelemente (8, 8') unter mechanischer Vorspannung, gleichzeitig am Ventilglied (2) angreifen.

13. Elektroventil nach einem der Ansprüche 1 bis 12, **dadurch gekennzeichnet, dass** mindestens ein Piezo-Biegeelement (8, 8') ausschließlich durch Berührkontakt mit dem Ventilglied (2) zusammenwirkt.

14. Elektroventil nach einem der Ansprüche 1 bis 13, **gekennzeichnet durch** eine anhand des aktuellen Biegezustandes mindestens eines Piezo-Biegeelementes (8) die Position des Ventilgliedes (2) erfassende Positionserfassungeinrichtung (25).

15. Elektroventil nach Anspruch 14, **dadurch gekennzeichnet, dass** mindestens ein Piezo-Biegeelement (8, 8') zur Erfassung seines Biegezustandes mit mindestens einem Dehnmeßstreifen (29) oder einem anderen Sensor ausgestattet ist.

16. Elektroventil nach einem der Ansprüche 1 bis 15, **dadurch gekennzeichnet, dass** mindestens ein Piezo-Biegeelement (8, 8') einen länglichen streifenartigen Träger (27) aufweist, der zumindest einseitig mit piezoelektrischem Material (28) beschichtet ist.

17. Elektroventil nach Anspruch 16, **dadurch gekennzeichnet, dass** das piezoelektrische Material auf den Träger (27) aufgeklebt ist.

18. Elektroventil nach Anspruch 16 oder 17, **dadurch gekennzeichnet, dass** der Träger (27) aus hochfester Keramik besteht, beispielsweise Aluminiumoxid, Zirkonoxid oder Siliziumnitrid.

19. Elektroventil nach einem der Ansprüche 16 bis 18, **dadurch gekennzeichnet, dass** der Elastizitätsmodul und die Dicke des Trägers (27) und des piezoelektrischen Materials so aufeinander abgestimmt sind, dass sich der elektromechanische Wirkungsgrad des Piezo-Biegeelementes (8, 8') am Maximum befindet.

20. Elektroventil nach einem der Ansprüche 16 bis 19, **dadurch gekennzeichnet, dass** das piezoelektrische Material (28) einen Multilayer-Aufbau hat.

21. Elektroventil nach Anspruch 20, **dadurch gekennzeichnet, dass** die Schichtebenen der einzelnen Schichten des piezoelektrischen Materials (28) in Längsrichtung des Trägers (27) oder quer zu dieser verlaufen.

## Claims

1. Electrovalve with a valve member (2) guided for linear movement relative to a valve housing (4) and assigned an electrically activated piezoelectric drive device containing at least one piezoelectric bending element (8, 8') extending at right angles to the traversing direction of the valve member (2), one end of which so acts on the valve member (2) and the other end of which is so secured to the housing that its electrically effected bending movement causes the linear traversing movement of the valve member (2), **characterised in that** the piezoelectric drive device (3) comprises a plurality of piezoelectric bending elements (8, 8'), at least two piezoelectric bending elements (8, 8') being provided, which are capable of acting on the valve member (2) with actuating forces oriented in opposite directions.

2. Electrovalve according to claim 1, **characterised in that** the valve member (2) is represented by a valve spool.

3. Electrovalve according to claim 1 or 2, **characterised in that** different piezoelectric bending elements (8, 8') are capable of being electrically driven individually.

4. Electrovalve according to any of claims 1 to 3, **characterised in that** a control unit (17) is provided for electrically driving the piezoelectric bending elements (8, 8') in a co-ordinated way with variable voltages for creating different actuating strokes and/or actuating positions of the valve member (2).

5. Electrovalve according to claim 4, **characterised in that** the control unit (17) permits the voltage-graded driving of the piezoelectric bending elements (8, 8') for the implementation of a multi-position behaviour of the valve member (2)

6. Electrovalve according to any of claims 1 to 5, **characterised in that** two piezoelectric bending elements (8, 8') acting on the valve member (2) are arranged adjacent to one another.

7. Electrovalve according to claim 6, **characterised in that** the two piezoelectric bending elements (8, 8') jointly act on one of the two axial end sections of the valve member (2).

8. Electrovalve according to claim 6 or 7, **characterised in that** the two piezoelectric bending elements (8, 8') are jointly assigned to one of the two axial end areas of the valve housing (4).

9. Electrovalve according to any of claims 1 to 8, **characterised in that** two piezoelectric bending elements (8, 8') act on the two opposite axial end sections of the valve member (2).

10. Electrovalve according to any of claims 1 to 9, **characterised in that** the valve is designed as an infinite-position valve.

11. Electrovalve according to any of claims 1 to 10, **characterised in that** at least one piezoelectric bending element (8, 8') acts on the valve member (2) under mechanical preload.

12. Electrovalve according to claim 11, **characterised in that** two opposing piezoelectric bending elements (8, 8') simultaneously act on the valve member (2) under mechanical preload.

13. Electrovalve according to any of claims 1 to 12, **characterised in that** at least one piezoelectric bending element (8, 8') exclusively acts together with the valve member (2) by touch contact.

14. Electrovalve according to any of claims 1 to 13, **characterised in that** a position detecting device (25) is provided, which detects the position of the valve member (2) on the basis of the current bending state of at least one piezoelectric bending element (8).

15. Electrovalve according to claim 14, **characterised in that** at least one piezoelectric bending element (8, 8') is provided with at least one strain gauge (29) or another sensor for detecting its bending state.

16. Electrovalve according to any of claims 1 to 15, **characterised in that** at least one piezoelectric bending element (8, 8') has an oblong strip-like carrier (27) coated with a piezoelectric material (28) on at least one side.

17. Electrovalve according to claim 16, **characterised in that** the piezoelectric material is bonded to the carrier (27).

18. Electrovalve according to claim 16 or 17, **characterised in that** the carrier (27) is made of a high-strength ceramic material such as aluminium oxide, circonium oxide or silicon nitride.

19. Electrovalve according to any of claims 16 to 18, **characterised in that** the modulus of elasticity and the thickness of the carrier (27) and of the piezoelectric material are so matched that the electromechanical efficiency of the piezoelectric bending element (8, 8') reaches a maximum.

20. Electrovalve according to any of claims 16 to 19, **characterised in that** the piezoelectric material (28) has a multi-layer structure.

21. Electrovalve according to claim 20, **characterised in that** the planes of the individual layers of the piezoelectric material (28) extend in the longitudinal direction of the carrier (27) or at right angles thereto.

## Revendications

1. Electrovanne, avec un élément de vanne (2) guidé de manière à coulisser linéairement par rapport à un carter de vanne (4) auquel est affecté un dispositif d'actionnement piézoélectrique activable électriquement qui comprend au moins un élément de flexion piézoélectrique (8, 8') s'étendant perpendiculairement au sens de déplacement de l'élément de vanne (2), qui agit, d'une part, sur l'élément de vanne (2) et qui est, d'autre part, fixé rigidement sur le carter de telle manière que son mouvement de flexion provoqué électriquement entraîne le mouvement de déplacement linéaire de l'élément de vanne (2), **caractérisée en ce que** le dispositif d'actionnement piézoélectrique (3) comporte plusieurs éléments de flexion piézoélectriques (8, 8') agissant sur l'élément de vanne (2), au moins deux éléments de flexion piézoélectriques (8, 8') étant prévus, qui peuvent exercer des forces de réglage orientées à l'opposé l'une de l'autre sur l'élément de vanne (2).

2. Electrovanne selon la revendication 1, **caractérisée en ce que** l'élément de vanne (2) est formé par un robinet-vanne.

3. Electrovanne selon la revendication 1 ou 2, **caractérisée en ce que** divers éléments de flexion piézoélectriques (8, 8') peuvent être commandés électriquement individuellement.

4. Electrovanne selon l'une des revendications 1 à 3, **caractérisée par** un dispositif de commande (17) pour la commande électrique des éléments de flexion piézoélectriques (8, 8') synchronisés les uns avec les autres, avec des tensions variables pour créer des parcours de réglage et/ou des positions de réglage différents de l'élément de vanne (2).

5. Electrovanne selon la revendication 4, **caractérisée en ce que** le dispositif de commande (17) permet une commande des éléments de flexion piézoélectriques (8, 8') échelonnée selon la tension afin de réaliser un comportement à positions multiples de l'élément de vanne (2).

6. Electrovanne selon l'une des revendications 1 à 5, **caractérisée en ce que** deux éléments de flexion piézoélectriques (8, 8') agissant sur l'élément de vanne (2) sont disposés l'un près de l'autre.

7. Electrovanne selon la revendication 6, **caractérisée en ce que** les deux éléments de flexion piézoélectriques (8, 8') agissent en commun sur l'une des deux sections terminales axiales de l'élément de vanne (2).

8. Electrovanne sefon la revendieation 6 ou 7, **caractérisée en ce que** les deux éléments de flexion piézoélectriques (8, 8') sont affectés en commun à l'une des deux zones terminales axiales du carter de vanne (4).

9. Electrovanne selon l'une des revendications 1 à 8, **caractérisée en ce que** deux éléments de flexion piézoélectriques (8, 8') agissent en commun sur les deux sections terminales axiales opposées l'une à l'autre de l'élément de vanne (2).

10. Electrovanne selon l'une des revendications 1 à 9, **caractérisée par** une configuration sous forme de vanne continue.

11. Electrovanne selon l'une des revendications 1 à 10, **caractérisée en ce qu'**au moins un élément de flexion piézoélectrique (8, 8') agit sur l'élément de vanne (2) sous précontrainte mécanique.

12. Electrovanne selon la revendication 11, **caractérisée en ce que** deux éléments de flexion piézoélectriques (8, 8') opérant en sens inverse agissent simultanément sur l'élément de vanne (2) sous précontrainte mécanique.

13. Electrovanne selon l'une des revendications 1 à 12, **caractérisée en ce qu'**au moins un élément de flexion piézoélectrique (8, 8') coopère avec l'élément de vanne (2) exclusivement par contact.

14. Electrovanne selon l'une des revendications 1 à 13, **caractérisée par** un dispositif de détection de position (25) détectant la position de l'élément de vanne (2) à l'aide de l'état de flexion actuel d'au moins un élément de flexion piézoélectrique (8).

15. Electrovanne selon la revendication 14, **caractérisée en ce qu'**au moins un élément de flexion piézoélectrique (8, 8') est muni d'au moins une bande de mesure d'allongement (29) ou d'un autre détecteur pour la détection de son état de flexion.

16. Electrovanne selon l'une des revendications 1 à 15, **caractérisée en ce qu'**au moins un élément de flexion piézoélectrique (8, 8') comporte un support oblong en forme de bande (27) qui est revêtu d'une matière piézoélectrique (28) sur au moins un côté.

17. Electrovanne selon la revendication 16, **caractérisée en ce que** la matière piézoélectrique est collée sur le support (27).

18. Electrovanne selon la revendication 16 ou 17, **caractérisée en ce que** le support (27) est fait de céramique à haute résistance, par exemple d'oxyde d'aluminium, d'oxyde de zircon ou de nitrure de silicium.

19. Electrovanne selon l'une des revendications 16 à 18, **caractérisée en ce que** le module d'élasticité et l'épaisseur du support (27) et de la matière piézoélectrique sont accordés l'un avec l'autre de manière à ce que le rendement électromécanique de l'élément de flexion piézoélectrique (8, 8') soit au maximum.

20. Electrovanne selon l'une des revendications 16 à 19, **caractérisée en ce que** la matière piézoélectrique (28) présente une structure multicouche.

21. Electrovanne selon la revendication 20, **caractérisée en ce que** les plans de stratification des couches individuelles de la matière piézoélectrique (28) s'étendent dans la direction longitudinale du support (27) ou perpendiculairement à celui-ci.
